# EUROPÄISCHE PATENTANMELDUNG

(11) **EP 3 689 196 A1**
(43) Veröffentlichungstag der Anmeldung: **05.08.2020**
(21) Anmeldenummer: 20000052.9
(22) Anmeldetag: 04.02.2020
(51) Int. Cl.: A47J 27/00, A23C 19/08, A23L 3/015

(54) **VORRICHTUNG ZUR KÜHLUNG VON HOCHERHITZTEN LEBENSMITTELPRODUKTEN SOWIE ENTSPRECHENDES VERFAHREN UND HOCHERHITZUNGSLINIE DAMIT**

(30) Priorität: 04.02.2019 DE 202019000419 U
(71) Anmelder: Stephan Machinery GMBH, 31789 Hameln (DE)
(72) Erfinder: Brockmann, Gerhard, 31855 Aerzen (DE)
(74) Vertreter: Reichert & Lindner Partnerschaft Patentanwälte

(57) **Zusammenfassung**

Die Erfindung betrifft eine Vorrichtung (1) zur Kühlung von hocherhitzten Lebensmittelprodukten mit einer Flashkühlung, die einen Behälter (17) für ein abzukühlendes Vorprodukt (33) mit einem Einlass (47, 48) für das abzukühlende Vorprodukt (33) und einem Auslass (49, 50) für das abgekühlte Endprodukt (38) des Lebensmittelprodukts sowie Kühleinrichtungen (41) enthält, wobei die Kühleinrichtungen (41) einen dem Behälter (17) zugeordneten Kühlmantel (42) enthalten, durch die wenigstens ein Teil der Wand (43) des Behälters (17) gekühlt wird. Außerdem betrifft die Erfindung auch eine Hocherhitzungslinie (2) für Lebensmittelprodukte, wobei eine solche Vorrichtung (1) enthalten ist. Ferner betrifft die Erfindung ein Verfahren zur Kühlung von hocherhitzten, insbesondere ultrahocherhitzten Lebensmittelprodukten, mit einer Flashkühlung, die einen Behälter (17) für ein abzukühlendes Vorprodukt (33), mit einem Einlass (47, 48) für das abzukühlende Vorprodukt (33) und einem Auslass (49, 50) für das abgekühlte Endprodukt (38) des Lebensmittelprodukts sowie Kühleinrichtungen (41) enthält, wobei Flüssigkeit aus dem Vorprodukt (33) verdampft und die Wärme durch Kondensation an der Innenwand des Behälters (17) abgeführt wird.

## Beschreibung

Die Erfindung betrifft eine Vorrichtung zur Kühlung von hocherhitzten, insbesondere ultrahocherhitzten Lebensmittelprodukten oder Lebensmitteln nach dem Oberbegriff des Anspruchs 1 sowie eine damit ausgestattete Hocherhitzungslinie. Im Rahmen der Erfindung liegt und als hier offenbart gilt auch ein entsprechendes Verfahren zur Kühlung von ultrahocherhitzten Lebensmittelprodukten insbesondere in einer Hocherhitzungslinie.

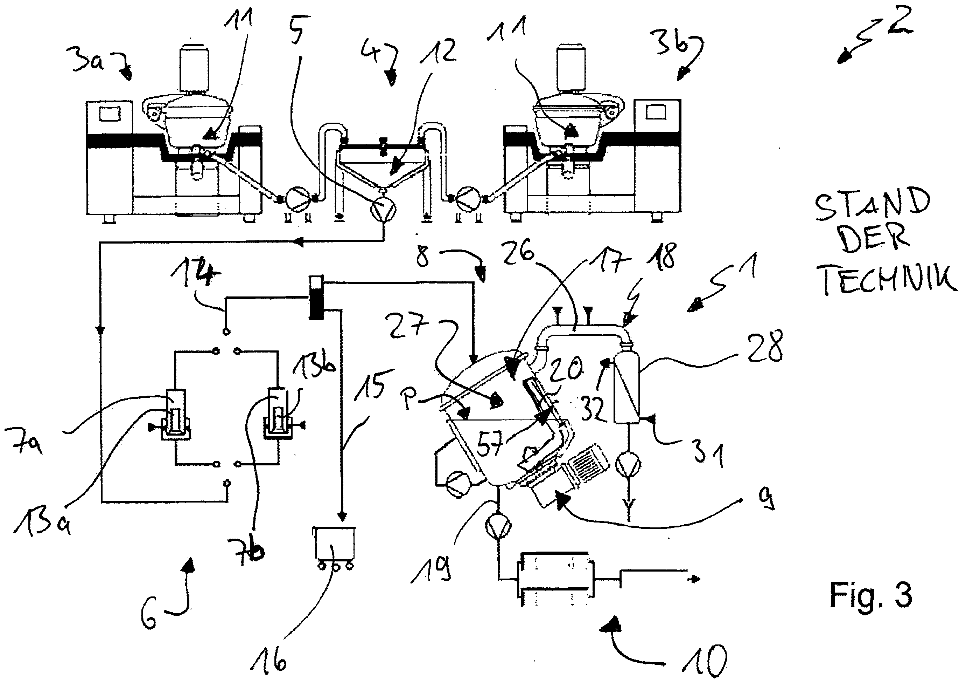

In der Praxis sind unter Verwendung einer solchen Vorrichtung 1 zur Kühlung von hocherhitzten Lebensmittelprodukten kontinuierliche Hocherhitzungslinien 2, wie z.B. für Schmelzkäse oder allgemein ein Lebensmittelprodukt bekannt. Eine solche Hocherhitzungslinie 2 mit einem Durchsatz von bis zu 1000 kg/h setzt sich, wie exemplarisch in der Fig. 3 gezeigt ist, neben einer zusammen aus mindestens einem Vorkocher (es sind in dem in der Fig. 3 gezeigten Beispiel zwei Vorkocher 3a und 3b enthalten), einem Pufferbehälter 4 mit einer Entleerungspumpe 5, einem Hocherhitzungssystem 6 mit im Beispiel der Fig. 3 zwei Hocherhitzungsstrecken 7a und 7b, einer Flashkühlung 8, einer optionalen Cremierungsvorrichtung 9, die in die Flashkühlung 8 integriert sein kann, wie beim in der Fig. 3 gezeigten Beispiel, sowie nachfolgend zusammenfassend beschrieben als Filterstation (z.B. mit einem Doppelfilter) und Abfülleinrichtungen 10.

Die beiden Vorkocher 3a und 3b arbeiten wechselweise im Batchbetrieb. Nach Befüllung eines Vorkochers 3a bzw. 3b mit Rohwaren 11 des Lebensmittelprodukts erfolgt dort eine Zerkleinerung, Vermischung und Vorerhitzung auf eine Temperatur bis 95 °C, um ein Zwischenprodukt 12 des Lebensmittelprodukts zu erhalten. Jeder Vorkocher 3a und 3b entleert das Zwischenprodukt 12 in den Pufferbehälter 4 und dessen Entleerungspumpe 5 fördert das aus den Vorkochern 3a und 3b erhaltene Zwischenprodukt 12 kontinuierlich durch anschließend nacheinander das Hocherhitzungssystem oder die Hocherhitzungseinrichtung oder allgemein Hocherhitzung 6 und die Flashkühlung 8 sowie die Cremierungsvorrichtung 9 zu der Filterstation (z.B. mit einem Doppelfilter) und den Abfülleinrichtungen 10. In der Hocherhitzung 6 wird das Zwischenprodukt 12 auf beispielsweise 145 °C hocherhitzt und sterilisiert, wie z.B. über je einen Ultrahochtemperaturkopf 13a und 13b pro Hocherhitzungsstrecke 7a bzw. 7b, so dass das soweit behandelte Vorprodukt 14 des Lebensmittelprodukts entsteht. Solange die der Hoch- oder Ultrahocherhitzungstemperatur nicht erreicht ist, werden nicht ausreichend sterilisierte Komponenten 15 ausgefiltert und in ein Reststoffbehältnis 16 abgeleitet. Im nachfolgenden Behälter 17 der im vorliegenden Beispiel kombinierten Flashkühlung 8 und Cremierungsvorrichtung 9 wird das Vorprodukt 14 über eine Vakuumkühlung 18 auf eine Abfülltemperatur von beispielsweise 80 - 90 °C abgekühlt und abhängig von gewünschten Eigenschaften des Endproduktes 19 des Lebensmittelprodukts unter Umständen cremiert, d.h. es wird die für das Endprodukt 19 erwünschte Viskosität aufgebaut. Über die Drehzahl eines Cremierwerkzeuges 20 der Cremierungsvorrichtung 9 und den Füllstand im Behälter 17 kann die Art und Intensität des Cremierungsergebnisses beeinflusst werden.

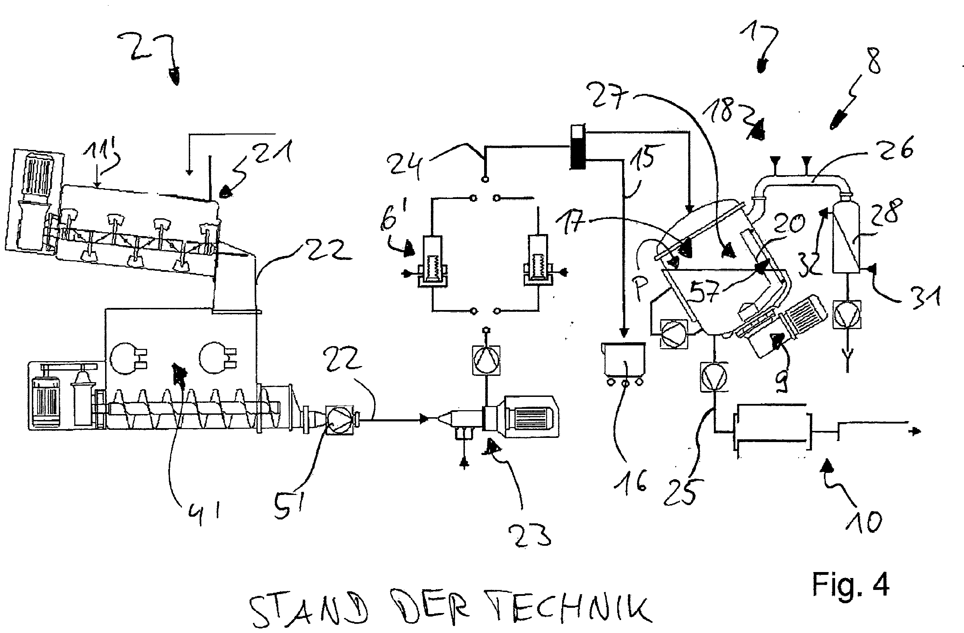

Bei einer aus der Praxis bekannten Hocherhitzungslinie 2' für größere Leistungen von über 1000 kg/h, wie exemplarisch die Fig. 4 zeigt, werden die vorzerkleinerten (z.B. mittels Wolf) Rohwaren 11' des Lebensmittelprodukts werden mit weiteren Rezepturbestandteilen (Wasser, Aromen, Schmelzsalt, etc.) in einem Vormischer 21 homogen vermischt und in einen Pufferbehälter 4' entleert. Dessen Entleerungspumpe 5' fördert das gemischte Zwischenprodukt 22 des Lebensmittelprodukts kontinuierlich in einen als Vorkocher 3 dienenden Continuous Cooker 23, wo die Vorerhitzung auf bis zu 95°C und bei Einsatz eines entsprechenden Werkzeugsatzes weitere Homogenisierung erfolgt und anschließend durch die Hocherhitzungseinrichtung 6', um das Vorprodukt 24 zu erhalten, wie schon im Zusammenhang mit Fig. 3 beschrieben wurde und mit allen entsprechenden Maßnahmen und Effekten hier auch gilt. Im nachfolgenden Flashkühlungs- und Cremierbehälter 17 der im vorliegenden Beispiel kombinierten Flashkühlung 8 und Cremierungsvorrichtung 9 wird über eine Vakuumkühlung 18 das Vorprodukt 24 des Lebensmittelprodukts auf Abfülltemperatur abgekühlt und abhängig von gewünschten Eigenschaften des Endproduktes 25 des Lebensmittelprodukts unter Umständen cremiert, d.h. es wird die für das Endprodukt 25 erwünschte Viskosität aufgebaut. Über die Drehzahl eines Cremierwerkzeuges 20 der Cremierungsvorrichtung 9 und den Füllstand im Behälter 17 kann die Art und Intensität des Cremierungsergebnisses beeinflusst werden.

Die Flashkühlung 8 und Cremierungsvorrichtung 9 können bei aus der Praxis bekannten Vorrichtungen 1 zur Kühlung von hocherhitzten Lebensmittelprodukten auch getrennt in zwei verschiedenen Behältern (nicht dargestellt) durchgeführt werden.

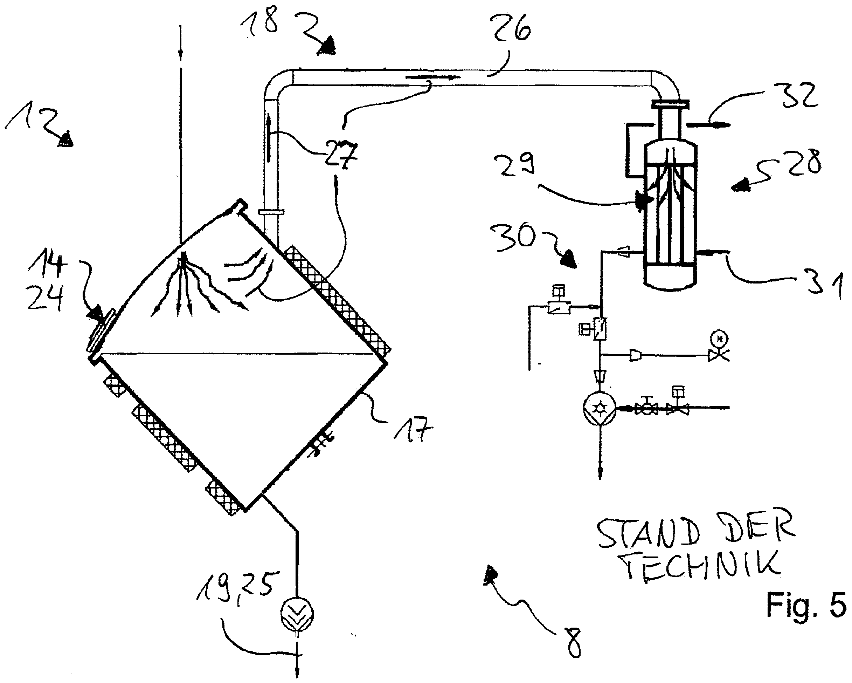

Zur Verdeutlichung der Bauart der aus der Praxis bekannten Vorrichtungen 1 zur Kühlung von hocherhitzten Lebensmittelprodukten in einer Hocherhitzungslinie ist eine solche Vorrichtung 1 in der Fig. 5 vergrößert dargestellt, wobei auf eine kombinierte Cremierungsvorrichtung 9 der Übersichtlichkeit halber und, weil diese zur grundsätzlichen Bauart der Flashkühlung 8 nichts beiträgt, weggelassen wurde.

Die in der Fig. 5 exemplarisch gezeigte Vorrichtung 1 zur Kühlung von hocherhitzten Lebensmittelprodukten in einer Hocherhitzungslinie wird als Flashkühlung 8 bezeichnet. Diese Flashkühlung 8 enthält neben dem Behälter 17, der im Betrieb teilweise mit dem Vorprodukt 14 oder 24 gefüllt ist, ein Brüdenrohr 26, durch das aus dem Vorprodukt 14 oder 24 entstehender Dampf 27 zu einem Wärmetauscher 28 geleitet wird, aus dem entstehendes Kondensat 29 über eine Vakuumpumpe 30 abgeführt wird. Die gewünschte Abkühlung des hocherhitzten oder ultrahocherhitzten Vorproduktes 14 oder 24 von beispielsweise 95 °C oder 145 °C auf eine erforderliche Abfülltemperatur des Endproduktes 19 oder 25 von in der Regel 80 - 90 °C erfolgt durch Absenkung des Druckes und Verdampfen von Wasser aus dem Vorprodukt 14 oder 24. Der Unterdruck wird dabei über eine Vakuumpumpe (nicht dargestellt) erzeugt und der entstehende Dampf in einem dem Wärmetauscher 28 kondensiert, der dazu über eine Kühlfluidzuleitung 31 und eine Kühlfluidableitung 32 verfügt. der in dem Behälter 17 der Flashkühlung 8 entstehende Dampf aus dem Vorprodukt 14 oder 24 wird also in dem bezüglich des Behälters 17 externen Wärmetauscher oder Kondensator 28 niedergeschlagen und dann aus dem Gesamtprozess entfernt.

Neben dem apparativem Aufwand für den externen Wärmetauscher oder Kondensator 28 und dem Betriebsaufwand dafür ist bei dieser Art einer Vorrichtungen zur Kühlung von hocherhitzten Lebensmittelprodukten in einer Hocherhitzungslinie zusätzlich von Nachteil, dass die Kühlung des Vorproduktes in dem Behälter der Flashkühlung nicht optimal ist, da sie nur über den Unterdruck erzeugt wird.

Die vorliegende Erfindung hat zur Aufgabe, die Nachteile des Standes der Technik zu lindern oder zu beheben.

Dies erreicht die Erfindung mit einer Vorrichtungen zur Kühlung von hocherhitzten Lebensmittelprodukten nach dem Anspruch 1 sowie einer damit ausgestatteten Hocherhitzungslinie. Die Erfindung bietet ferner Lösungen der Aufgabe in Form von entsprechenden Betriebsverfahren einer Vorrichtung zur Kühlung von hocherhitzten Lebensmittelprodukten nach dem Anspruch 1 sowie einer damit ausgestatteten Hocherhitzungslinie.

Konkret schafft die Erfindung eine Vorrichtung zur Kühlung von hocherhitzten Lebensmittelprodukten mit einer Flashkühlung, die einen Behälter für ein abzukühlendes Vorprodukt mit einem Einlass für das abzukühlende Vorprodukt und einem Auslass für das abgekühlte Endprodukt sowie Kühleinrichtungen enthält, wobei die Kühleinrichtungen einen dem Behälter zugeordneten Kühlmantel enthalten, durch die wenigstens ein Teil der Wand des Behälters gekühlt wird.

Ergänzend wird angegeben, dass das dem Behälter zugeleitete Vorprodukt eine Eingangstemperatur T1 und das aus dem Behälter entnommene Endprodukt eine Austragstemperatur T2 haben, wobei T1 > T2, wodurch die Abkühlung definiert ist.

Eine kühlende Kondensation des Dampfes aus dem Vorprodukt entsteht erfindungsgemäß also an zumindest einem gekühlten Teil der Wand oder Innenflächen des Behälters. Die kontinuierliche Abkühlung von insbesondere 145 °C auf bis zu 20 °C (bei einem Schmelzkäseherstellungsprozess in der Regel bis 80 °C beim Endprodukt) erfolgt nach wie vor durch Absenken des Druckes und Verdampfen von Wasser aus dem Vorprodukt. In der Flashkühlung oder ggf. Flashkühlung und Cremierung wird das hoch- oder ultrahocherhitzte Vorprodukt (z.B. Schmelzkäse) auf eine Abfülltemperatur des Endproduktes von in der Regel 80 - 90 °C abgekühlt und ggf. cremiert.

Entgegen dem bisherigen Stand der Technik wird aus dem Vorprodukt resultierender Dampf nicht extern in einem Wärmetauscher oder Kondensator niedergeschlagen, der somit apparativ und betriebsmäßig eingespart werden kann, sondern durch den Kühlmantel gleich im Behälter der Flashkühlung sowie ggf. Cremierungsvorrichtung zumindest an einem Teil der Innenflächen des Behälters kondensiert. Das entstehende Kondensat trägt zusätzlich zur Kühlung des Vorproduktes und damit Erreichung des Endproduktes mit der gewünschten Ausgabetemperatur bei. Insbesondere wird das entstehende Kondensat während des Cremiervorganges untergemischt, was die Nutzung des Kondensates zur Abkühlung des Vorproduktes und damit Erreichung des Endproduktes weiter verbessert. Dadurch dass das Kondensat im Produkt verbleibt und nicht wie beim Stand der Technik extern abgeführt wird, kann die entsprechende Wassermenge bei der Rezeptur für die Erreichung des gewünschten Endproduktes eingespart werden. Ferner wird, indem das Kondensat dem Vorprodukt wieder zugeführt wird, in dem Kondensat enthaltenes Aroma im Prozess behalten, was ebenfalls Einsparungen bei der Rezeptur für die Erreichung des gewünschten Endproduktes zur Folge hat.

Die erfindungsgemäße Vorrichtung zur Kühlung von hocherhitzten Lebensmittelprodukten schafft damit eine geschlossenen Kühlung oder ggf. geschlossenen Kühlung und Cremierung von hocherhitzten und insbesondere ultrahocherhitzten Lebensmittelprodukten.

Die Absenkung des Druckes im Behälter erfolgt erfindungsgemäß durch die Kondensation an dem gekühlten oder kalten Teil der Wand oder Innenflächen des Behälters. Eine solche Absenkung des Druckes im Behälter kann ferner zum Entzug von nicht erwünschten Gasen, wie z.B. Luft, durch eine externe Vakuumpumpe erfolgen oder unterstützt werden, die auch beispielsweise zum Initiieren der Druckabsenkung im Behälter und damit des Kühleffekts vorgesehen und eingesetzt werden kann.

Bevorzugt enthält der Behälter eine Schüssel mit dem Auslass für das abgekühlte Endprodukt und einen Deckel, dem der Einlass für das abzukühlende Vorprodukt zugeordnet sein kann, und sind die Kühleinrichtungen sowohl der Schüssel als auch dem Deckel zugeordnet. Dies bedeutet, dass die Kühleinrichtungen ggf. nicht nur auf den Dampf aus dem Vorprodukt, sondern auf das abzukühlende Vorprodukt selbst wirken können.

Mit Vorzug ist kann weiterhin vorgesehen sein, dass der Kühlmantel durch eine Doppelwandung zumindest eines Teils oder zumindest an einem Teil des Behälters oder Pillow Plates gebildet ist.

Weitere vorzugsweise Ausgestaltungen bestehen darin dass der Kühlmantel ggf. an der Schüssel und am Deckel des Behälters angeordnet oder ausgebildet ist, und/oder dass der Kühlmantel wenigstens zwei getrennt betreibbare Kühlzonen enthält.

Bevorzugt kann eine weitere Abkühlung oder Temperierung des Produktes durch eine weitere Doppelwandung oder Kühlzone im unteren Teil des Behälters unterhalb des Produktspiegels erfolgen.

Der Behälter kann senkrecht oder in einem Winkel zur Senkrechten aufgestellt, sowie mit einem Rührwerk für den Fall der in dem Behälter erfolgenden Kühlung und Cremierung oder ohne Rührwerk ausgeführt werden, wenn in dem Behälter nur eine Kühlung ohne Cremierung erfolgen soll.

Eine weitere Optimierung von Kondensation und damit Leistung kann ferner vorzugsweise durch ein angetriebenes Arbeitswerkzeug, wie beispielsweise der Rührarm oder ein Misch- oder Cremierflügel mit wenigstens einem Abstreifer erzielt werden. Durch den oder die Abstreifer wird das an dem gekühlten oder kalten Teil der Wand oder den Innenflächen des Behälters entstehende Kondensat kontinuierlich entfernt und damit ein Kondensatfilm, welcher den Wärmedurchgang verringert, verhindert.

Durch die Erfindung wird ferner ein Verfahren zur Kühlung von hocherhitzten, insbesondere ultrahocherhitzten Lebensmittelprodukten geschaffen, wobei eine Flashkühlung verwendet wird, die einen Behälter für ein abzukühlendes Vorprodukt mit einem Einlass für das abzukühlende Vorprodukt und einem Auslass für das abgekühlte Endprodukt des Lebensmittelprodukts sowie Kühleinrichtungen enthält, wobei Flüssigkeit aus dem Vorprodukt verdampft und die Wärme durch Kondensation an der Innenwand des Behälters abgeführt wird.

Vorzugsweise und vorteilhafte Weiterbildungen des erfindungsgemäßen Verfahrens sind durch die Verwendung der vorerläuterten bevorzugten und/oder vorteilhaften weiterer Ausgestaltungen der entsprechenden Vorrichtung bestimmt.

Weitere bevorzugte und/oder vorteilhafte Ausgestaltungen der Erfindung und ihrer einzelnen Aspekte ergeben sich aus den Kombinationen einzelner Ansprüche sowie den gesamten vorliegenden Anmeldungsunterlagen.

Die Erfindung wird anhand von Ausführungsbeispielen nachfolgend unter Bezugnahme auf die Zeichnung lediglich exemplarisch näher erläutert, in der
Fig. 1 in einer schematischen Schnittansicht ein erstes Ausführungsbeispiel einer Vorrichtung zur Kühlung von hocherhitzten Lebensmittelprodukten veranschaulicht,
Fig. 2 in einer schematischen Schnittansicht ein zweites Ausführungsbeispiel einer Vorrichtung zur Kühlung von hocherhitzten Lebensmittelprodukten veranschaulicht,
Fig. 3 in einer schematischen Schnittansicht ein erstes Ausführungsbeispiel einer Hocherhitzungslinie mit einer Vorrichtung zur Kühlung von hocherhitzten Lebensmittelprodukten nach dem Stand der Technik veranschaulicht,
Fig. 4 in einer schematischen Schnittansicht ein zweites Ausführungsbeispiel einer Hocherhitzungslinie mit einer Vorrichtung zur Kühlung von hocherhitzten Lebensmittelprodukten nach dem Stand der Technik veranschaulicht, und
Fig. 5 in einer schematischen Schnittansicht Details der Vorrichtung zur Kühlung von hocherhitzten Lebensmittelprodukten nach dem Stand der Technik veranschaulicht.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführungs- und Anwendungsbeispiele oder auf die Merkmalskombinationen innerhalb eines Ausführungs- und Anwendungsbeispiels beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angegeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten kombiniert werden, auch wenn sie in den vorliegenden Unterlagen nicht gesondert behandelt sind.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

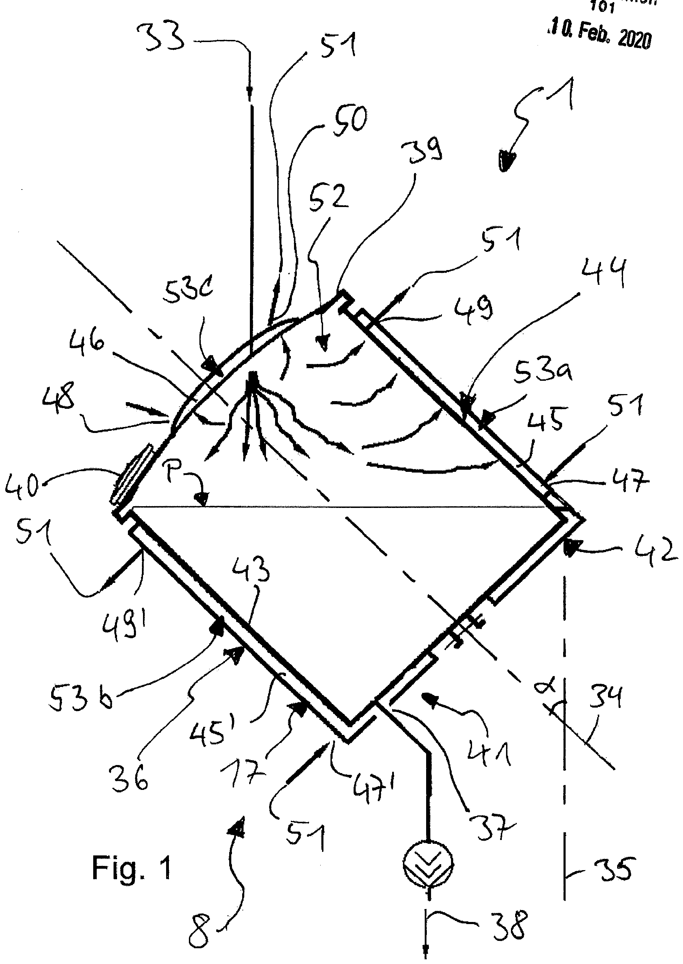

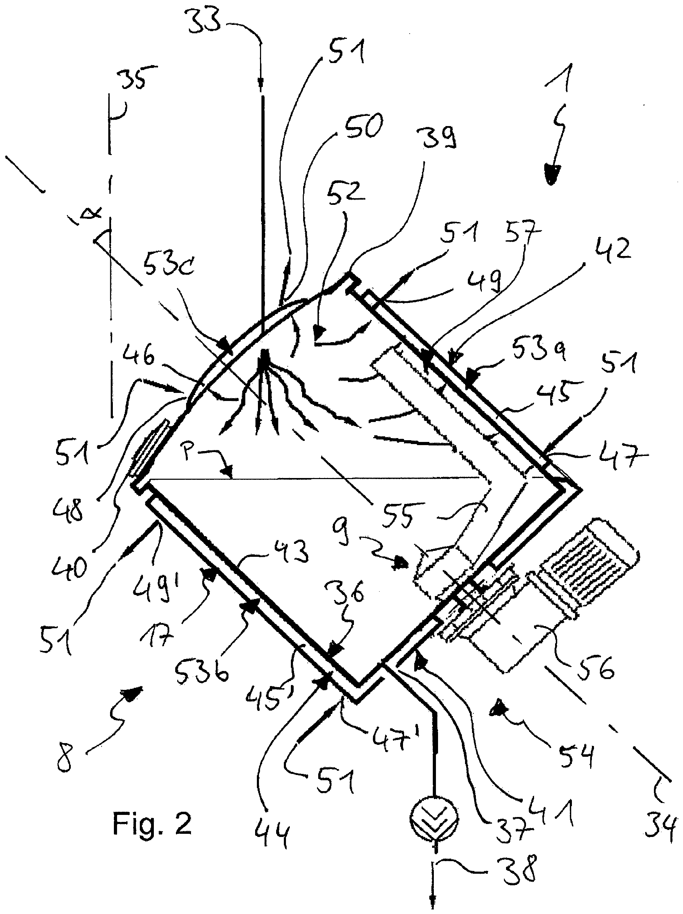

In den Fig. 1 und 2 ist ein erstes und zweites Ausführungsbeispiel einer Vorrichtung 1 zur Kühlung von hocherhitzten Lebensmittelprodukten veranschaulicht, und zwar in der Fig. 1 mit ohne und in der Fig. 2 mit kombinierter Cremierung, so dass die in beiden Ausführungsbeispielen identischen Merkmale und Ausgestaltungen nachfolgend unter Bezugnahme auf die Fig. 1 und 2 beschrieben werden.

Die in den Fig. 1 und 2 exemplarisch gezeigte Vorrichtung 1 zur Kühlung von hocherhitzten Lebensmittelprodukten wird insbesondere in Hocherhitzungslinien eingesetzt, wie sie aus dem Stand der Technik bekannt und diesbezüglich in den Fig. 3 und 4 veranschaulicht sind.

Die Vorrichtung 1 zur Kühlung von hocherhitzten Lebensmittelprodukten gemäß den Fig. 1 und 2 wird als Flashkühlung 8 bezeichnet. Diese Flashkühlung 8 enthält einen Behälter 17, der im Betrieb teilweise mit einem Vorprodukt 33 des Lebensmittelprodukts gefüllt ist. Bei den in den Fig. 1 und 2 gezeigten Ausführungsbeispielen ist der Behälter 17 zylindrisch und in einem Winkel α zur Senkrechten aufgestellt, d.h., seine Zylinderachse 34 verläuft unter einem von 0° verschiedenen Winkel α zur Senkrechten 35 auf dem Boden, auf dem die Vorrichtung 1 im Betrieb steht, könnte aber ohne Beeinträchtigung der grundsätzlichen Merkmale und Wirkungen der Erfindung auch senkrecht stehen. Der besagte Winkel α zwischen der Zylinderachse des Behälters 17 und der Senkrechten beträgt insbesondere 5° bis 65 °, vorzugsweise 15° bis 55° und besonders bevorzugt 25° bis 45°. Der Behälter 17 der ersten und zweiten Ausführungsbeispiele der Vorrichtung 1 zur Kühlung von hocherhitzten Lebensmittelprodukten gemäß den Fig. 1 und 2 enthält eine Schüssel 36 mit einem Auslass 37 für abgekühltes Endprodukt 38 und einen Deckel 39 mit einem Einlass 40 für das abzukühlende Vorprodukt 33.

Die Flashkühlung 8 enthält ferner Kühleinrichtungen 41, die einen dem Behälter 17 zugeordneten Kühlmantel 42 enthalten. Bei den ersten und zweiten Ausführungsbeispielen der Vorrichtung 1 zur Kühlung von hocherhitzten Lebensmittelprodukten gemäß den Fig. 1 und 2 ist der Kühlmantel 42 durch eine zonenweise doppelwandige Ausgestaltung der Wand 43 in Form einer Doppelwandung 44 sowie des Deckels 39 realisiert, so dass sich Hohlräume 45, 45' und 46 in der Wand 43 der Schüssel 36 bzw. im Deckel 39 befinden. Die Hohlräume 45, 45' und 46 sind mit Einlässen 47, 47' bzw. 48 und Auslässen 49, 49' bzw. 50 für Kühlflüssigkeit 51 in Fluidverbindung, so dass sie von der Kühlflüssigkeit 51 durchströmt werden können, die Wärme von der Wand 43 der Schüssel 36 und dem Deckel 39 aufnimmt oder nehmen kann und abtransportiert. Allgemein ausgedrückt kann der Kühlmantel durch eine Doppelwandung 44 zumindest eines Teils oder zumindest an einem Teil des Behälters 17 oder Pillow Plates gebildet sein.

Die Wand 43 der Schüssel 36 und der Deckel 39 werden einerseits von dem enthaltenen Vorprodukt 33 und daraus aufsteigendem Dampf 52 erwärmt und ziehen andererseits aus dem Vorprodukt 33 und daraus aufsteigendem Dampf 52 durch die Erwärmung der Kühlflüssigkeit 51 Wärme ab, so dass sich das Vorprodukt 33 und der daraus aufsteigende Dampf 52 abkühlen. Dies bedeutet, dass die Kühleinrichtungen 41 nicht nur auf den Dampf 52 aus dem Vorprodukt 33, sondern auf das abzukühlende Vorprodukt 33 selbst wirken. Weiterhin kondensiert der Dampf 52 aus dem Vorprodukt 33 an der kühlenden oder gekühlten Wand 43 der Schüssel 36 und dem kühlenden oder gekühlten Deckel 39 und fällt das entstandene Kondensat wieder in das Vorprodukt 33, das dadurch zusätzlich gekühlt wird. Die thermodynamischen Vorgänge und Effekte der Kühlung insgesamt werden als bekannt vorausgesetzt, so dass ein gesondertes Eingehen darauf nicht für erforderlich erachtet wird.

Die zonenweise doppelwandige Ausgestaltung der Wand 43 der Schüssel 36 bedeutet, dass der Kühlmantel 42 durch die Doppelwandung 44 zumindest eines Teils des Behälters 17 gebildet ist. Bei den in den Fig. 1 und 2 gezeigten Ausführungsbeispielen ist der Kühlmantel 42 lediglich beispielsweise Bereichen der Schüssel 36 und des Deckels 39 des Behälters 17 zugeordnet, könnte aber auch nur für einen Bereich oder mehrere Bereiche der Schüssel 36 oder des Deckels 39 des Behälters 17 vorgesehen sein. Ferner kann der Kühlmantel 42 wenigstens zwei getrennt betreibbare Kühlzonen 53a, 53b und 53c enthalten, wie bei den in den Fig. 1 und 2 gezeigten Ausführungsbeispielen exemplarisch anhand der drei Kühlzonen 53a, 53b und 53c gezeigt ist. Wesentlich ist somit, dass durch den Kühlmantel 42 wenigstens ein Teil der Wand 43 des Behälters 17 gekühlt wird.

Bevorzugt kann eine weitere Abkühlung oder Temperierung des Produktes durch eine weitere Doppelwandung 44 oder Kühlzone im unteren Teil des Behälters 17 unterhalb des Produktspiegels P, d.h. die Füll- oder Bestandshöhe des Produktinhalts in dem Behälter 17 erfolgen.

Durch die Kondensation an dem gekühlten oder kalten Teil der Wand 43 oder den Innenflächen des Behälters 17 erfolgt auch die Absenkung des Druckes im Behälter 17 und damit die Verdampfung von Wasser aus dem Vorprodukt 33. Eine solche Absenkung des Druckes im Behälter 17 kann ferner zum Entzug von nicht erwünschten Gasen, wie z.B. Luft, durch eine externe Vakuumpumpe (nicht gezeigt) erfolgen oder unterstützt werden.

Die Absenkung des Druckes im Behälter 17 erfolgt also durch die Kondensation an dem gekühlten oder kalten Teil der Wand 43 oder Innenflächen des Behälters 17. Eine solche Absenkung des Druckes im Behälter 17 kann ferner zum Entzug von nicht erwünschten Gasen, wie z.B. Luft, durch eine externe Vakuumpumpe (nicht gezeigt) erfolgen oder unterstützt werden, die auch beispielsweise zum Initiieren der Druckabsenkung im Behälter 17 und damit des Kühleffekts vorgesehen und eingesetzt werden kann.

Unter Bezugnahme nunmehr nur noch auf das in der Fig. 2 gezeigte zweite Ausführungsbeispiel der Vorrichtung 1 zur Kühlung von hocherhitzten Lebensmittelprodukten ist über die Merkmale des in der Fig. 1 gezeigten ersten Ausführungsbeispiels der Vorrichtung 1 zur Kühlung von hocherhitzten Lebensmittelprodukten ohne kombinierte Cremierung bei dem zweiten Ausführungsbeispiel in dem Behälter 17 zusätzlich eine Cremierungsvorrichtung 9 vorgesehen bzw. integriert. Diese Cremierungsvorrichtung 9 enthält ein Rührwerk 54 mit einem Rührarm 55 als Cremierwerkzeug 20 und einem Antrieb 56 für letzteren. Bei diesem Ausführungsbeispiel sorgt der Rührarm 55 im Betrieb insbesondere zusätzlich für das Einrühren oder Unterrühren des aus dem Vorprodukt 33 an der kühlenden oder gekühlten Wand 43 der Schüssel 36 und dem kühlenden oder gekühlten Deckel 39 entstehenden Kondensats, das wieder in das Vorprodukt 33 fällt, das dadurch zusätzlich gekühlt wird und für das Endprodukt 38 des Lebensmittelprodukts Nutzen aus dem somit erhaltenen Flüssigkeitsanteil und dessen Aromabestandteilen zieht.

Eine weitere Optimierung von Kondensation und damit Leistung kann ferner vorzugsweise durch ein angetriebenes Arbeitswerkzeug, wie beispielsweise der Rührarm 55 oder ein Misch- oder Cremierflügel mit wenigstens einem Abstreifer 57 erzielt werden. Durch den oder die Abstreifer 57 wird das an dem gekühlten oder kalten Teil der Wand 43 oder den Innenflächen des Behälters 17 entstehende Kondensat kontinuierlich entfernt und damit ein Kondensatfilm, welcher den Wärmedurchgang verringert, verhindert.

Verfahrensmäßig wird somit gemäß der Erfindung ein Vorprodukt 33 aus einer Hocherhitzungslinie einer Flashkühlung 8 zugeführt und direkt in deren Behälter 17 ausgeführt, dem dazu Kühleinrichtungen 41 zugeordnet sind, so dass das Vorprodukt 33 und daraus aufsteigender Dampf 52 direkt in dem Behälter 17 gekühlt werden, wobei sich Kondensat aus dem Dampf 52 im Inneren des Behälters 17 an zumindest Bereichen dessen Wand 43 und/oder Deckel 39 niederschlägt und das Kondensat zurück in das Vorprodukt 33 gelangt, so dass es zu dessen Abkühlung und Geschmack beiträgt.

Zusammenfassend sind einige wesentliche Vorteile der Erfindung gegenüber dem eingangs behandelten Stand der Technik:
- geringerer Flüssigkeitsverbrauch, wie z.B. Wasserverbrauch, da das Kondensat im Produkt verbleibt, wodurch der beispielsweise Wasseranteil der Rezeptur um die Kondensatmenge verringert werden kann;
- geringerer "Geschmacksstoffbedarf', da das Kondensat und darin enthaltene Aromen und Geschmacksstoffe im Produkt verbleiben, wodurch der "Geschmacksstoffbedarf" der Rezeptur verringert werden kann;
- kein mit Produktbestandteilen behaftetes Kondensat wird, wie z.B. über die Vakuumpumpe beim Stand der Technik ausgetragen und muss entsorgt werden;
- schnellere Reinigung und weniger Reinigungsmittelverbrauch, da keine Reinigung einer externen gesonderten Kondensatoranlage wie beim Stand der Technik notwendig ist;
- weniger Materialeinsatz, da insbesondere eine Kondensator und entsprechende Rohrleitungen etc. entfallen;
- geringere Grundfläche der Anlage.

Eine kühlende Kondensation des Dampfes 52 aus dem Vorprodukt 33 entsteht also gemäß der vorliegenden Erfindung an zumindest einem gekühlten Teil der Wand 43 oder Innenflächen des Behälters 17. Die kontinuierliche Abkühlung von insbesondere 145 °C auf bis zu 20 °C (bei einem Schmelzkäseherstellungsprozess in der Regel bis 80 °C beim Endprodukt 38) erfolgt nach wie vor durch Absenken des Druckes und Verdampfen von Wasser aus dem Vorprodukt 33. In der Flashkühlung 8 oder Flashkühlung 8 und Cremierungsvorrichtung 9 wird das hoch- oder ultrahocherhitzte Vorprodukt 33 (z.B. Schmelzkäse) auf eine Abfülltemperatur des Endproduktes 38 von in der Regel 80 - 90 °C abgekühlt und ggf. cremiert. Somit wird die gewünschte Abkühlung des hocherhitzten oder ultrahocherhitzten Vorproduktes 33 von beispielsweise 95 °C oder 145 °C auf eine erforderliche Abfülltemperatur des Endproduktes 38 von in der Regel 80 - 90 °C, aber auch auf eine niedrigere Temperatur, wie beispielsweise bis zu 20 °C erreicht.

Aus dem Vorprodukt 33 resultierender Dampf 52 wird durch den Kühlmantel 42 gleich im Behälter 17 der Flashkühlung 8 sowie ggf. Cremierungsvorrichtung 9 zumindest an einem Teil der Wand 43 oder Innenflächen des Behälters 17 kondensiert. Das entstehende Kondensat trägt zusätzlich zur Kühlung des Vorproduktes 33 und damit Erreichung des Endproduktes 38 des Lebensmittelprodukts mit der gewünschten Ausgabetemperatur bei. Insbesondere wird das entstehende Kondensat während des Cremiervorganges untergemischt, was die Nutzung des Kondensates zur Abkühlung des Vorproduktes 33 und damit Erreichung des Endproduktes 38 weiter verbessert, aber auch zu dem Endprodukt 38 Flüssigkeit (insbesondere Wasser) beiträgt, die bei der Rezeptur für die Erreichung des gewünschten Endproduktes 38 eingespart werden kann. Ferner wird, indem das Kondensat dem Vorprodukt 33 wieder zugeführt wird, in dem Kondensat enthaltenes Aroma im Prozess behalten, was ebenfalls Einsparungen bei der Rezeptur für die Erreichung des gewünschten Endproduktes 38 zur Folge hat.

Kontinuierliche Anlagen werden normalerweise mit konstantem Durchsatz gefahren. Je nach Produktionslage oder bei Störungen (z.B. Ausfall einer Abfüllmaschine) muss jedoch die Leistung entsprechend angepasst werden, d.h. es wird vorzugsweise eine Anpassung an Durchsatzänderungen vorgenommen. Bei der Erfindung kann eine Anpassung an unterschiedliche Leistungsbereiche der Produktion (z.B. 100....500 kg/h, 200....1000kg/h, 400....2000 kg/h usw.) vorteilhafterweise durch die Größe des Behälters 17 in Abhängigkeit von einer Cremierzeit und der Wärmeaustauschfläche der Doppelwandung 44 bzw. ggf. den Kühlzonen 53a, 53b bzw. 53c sowie ggf. weiteren Kühlzonen über die Kondensatorfläche, d.h. dem gekühlten oder kalten Teil der Wand 43 oder den Innenflächen des Behälters 17 realisiert werden.

Innerhalb eines jeden z.B. oben exemplarische angegebenen Leistungsbereiches kann die Anpassung an unterschiedlich abzuführende Wärmeleistungen vorzugsweise durch Abschaltung einzelner Doppelmantelsegmente, wie insbesondere ggf. den Kühlzonen 53a, 53b bzw. 53c und ggf. weiteren Kühlzonen, sowie Temperatur und Durchflussmenge von Kühlmedium, wie beispielsweise Kühlwasser im Doppelmantel oder in der Doppelwandung 44 vorgenommen werden.
- Regelung durch Abschaltung einzelner Doppelmantelsegmente, wie insbesondere ggf. einzelnen Kühlzonen 53a, 53b bzw. 53c und ggf. weiteren Kühlzonen: Zunächst erfolgt eine grobe Anpassung an unterschiedliche Wärmeleistungen innerhalb einer der beispielhaft oben genannten Leistungsbereiche durch Ausführung des Doppelmantels in mehreren Segmenten, wie insbesondere ggf. einzelnen Kühlzonen 53a, 53b bzw. 53c und ggf. weiteren Kühlzonen, und Betrieb nur einzelner oder aller Segmente, wie insbesondere ggf. einzelner oder mehrerer Kühlzonen 53a, 53b bzw. 53c und ggf. weiteren Kühlzonen. Eine Feinregelung kann über die nachstehend weiter aufgeführten Regelungsvarianten erfolgen.
- Mengenregelung: Hierbei werden die Menge des durchfließenden Kühlmediums, wie beispielsweise Kühlwasser, und damit der Wärmedurchgang vom kondensierenden Dampf zum Kühlmedium, wie beispielsweise Kühlwasser, über ein Regelventil angepasst. Bei steigender Produktionsleistung und Temperatur T im Behälter 17 wird der Durchfluss des Kühlmediums, wie beispielsweise Kühlwasser, erhöht und damit der Wärmedurchgang verbessert, bei sinkender Leistung und Temperatur T verringert.
- Temperaturregelung: Dabei erfolgt eine Änderung der Temperaturdifferenz zwischen kondensierendem Dampf und Kühlmedium, wie beispielsweise Kühlwasser, über die Regelung der Temperatur des Kühlmediums, wie beispielsweise Kühlwasser, mittels eines Mischventils. Bei steigender Produktionsleistung und Temperatur T im Behälter 17 werden die Temperatur des Kühlmediums, wie beispielsweise Kühlwasser, und damit die genannte Temperaturdifferenz durch Zufuhr von Kaltwasser verringert, bei sinkender Leistung und Temperatur T im Behälter 17 erhöht.

Der Vollständigkeit halber wird noch darauf hingewiesen, dass Schrägstellung des Behälter, Cremiervorrichtung 9, Rührwerk 54 und dessen Komponenten sowie Abstreifer 57, auch wenn diese Gestaltungen beim zweiten Ausführungsbeispiel nach der Fig. 2 kombiniert gezeigt sind, nicht zwingend nur zusammen in dieser Kombination verwendet werden können, sondern vielmehr ist jede dieser Gestaltungen im Rahmen der vorliegenden Erfindung unabhängig von den anderen genannten Gestaltungen und insbesondere allen anderen Gestaltungen in der Fig. 2 verwendbar.

Im Rahmen der Erfindung liegt auch ein Verfahren zur Kühlung von hocherhitzten, insbesondere ultrahocherhitzten Lebensmittelprodukten auf der Basis des bestimmungsgemäßen Betriebs der vorstehend beschriebenen und in den Ansprüchen beanspruchten Vorrichtung 1 zur Kühlung von hocherhitzten Lebensmittelprodukten. Insbesondere ist ein Verfahren zur vorzugsweise kontinuierlichen Kühlung von hocherhitzten, insbesondere ultrahocherhitzten Lebensmittelprodukten dadurch gekennzeichnet, dass Flüssigkeit aus dem Vorprodukt 33 verdampft und die Wärme durch Kondensation an der Innenwand des Behälters 17 abgeführt wird.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung und Zeichnung der Ausführungsbeispiele entnehmen und mit seinem fachmännischen Wissen sowie dem Stand der Technik kombinieren kann. Insbesondere sind alle einzelnen Merkmale und Ausgestaltungsmöglichkeiten der Ausführungsbeispiele untereinander kombinierbar.

### Bezugszeichenliste

- 1: Vorrichtung zur Kühlung von hocherhitzten Lebensmittelprodukten
- 2, 2': Hocherhitzungslinie
- 3a, 3b: Vorkocher
- 4, 4': Pufferbehälter
- 5, 5': Entleerungspumpe
- 6, 6': Hocherhitzungssystem oder -einrichtung oder Hocherhitzung
- 7a, 7b: Hocherhitzungsstrecke oder -modul
- 8: Flashkühlung
- 9: Cremierungsvorrichtung
- 10: Filterstation und Abfülleinrichtungen
- 11, 11': Rohwaren
- 12: Zwischenprodukt
- 13a, 13b: Ultrahochtemperaturkopf
- 14: Vorprodukt
- 15: nicht ausreichend sterilisierte Komponenten
- 16: Reststoffbehältnis
- 17: Behälter der Flashkühlung
- 18: Vakuumkühlung
- 19: Endprodukt
- 20: Cremierwerkzeug
- 21: Vormischer
- 22: Zwischenprodukt
- 23: Continuous Cooker
- 24: Vorprodukt
- 25: Endprodukt
- 26: Brüdenrohr
- 27: Dampf
- 28: Wärmetauscher oder Kondensator
- 29: Kondensat
- 30: Vakuumpumpe
- 31: Kühlfluidzuleitung
- 32: Kühlfluidableitung
- 33: Vorprodukt
- 34: Zylinderachse
- 35: Senkrechte auf dem Boden
- 36: Schüssel
- 37: Auslass
- 38: Endprodukt
- 39: Deckel
- 40: Einlass
- 41: Kühleinrichtungen
- 42: Kühlmantel
- 43: Wand
- 44: Doppelwandung
- 45, 45', 46: Hohlraum
- 47, 47', 48: Einlass
- 49, 49', 50: Auslass
- 51: Kühlflüssigkeit
- 52: Dampf
- 53a, b, c: Kühlzonen
- 54: Rührwerk
- 55: Rührarm
- 56: Antrieb
- 57: Abstreifer
- P: Produktspiegel
- α: Winkel

## Patentansprüche

1. Vorrichtung (1) zur Kühlung von hocherhitzten Lebensmittelprodukten mit einer Flashkühlung, die einen Behälter (17) für ein abzukühlendes Vorprodukt (33) mit einem Einlass (47, 48) für das abzukühlende Vorprodukt (33) und einem Auslass (49, 50) für das abgekühlte Endprodukt (38) des Lebensmittelprodukts sowie Kühleinrichtungen (41) enthält, wobei die Kühleinrichtungen (41) einen dem Behälter (17) zugeordneten Kühlmantel (42) enthalten, durch die wenigstens ein Teil der Wand (43) des Behälters (17) gekühlt wird.

2. Vorrichtung (1) nach einem der vorhergehenden Ansprüche, wobei der Kühlmantel (42) durch eine Doppelwandung (44) zumindest eines Teils oder zumindest an einem Teil des Behälters (17) oder Pillow Plates gebildet ist.

3. Vorrichtung (1) nach Anspruch 1 oder 2, wobei der Behälter (17) eine Schüssel (36) mit dem Auslass (49, 50) für das abgekühlte Endprodukt (38) des Lebensmittelprodukts und einen Deckel (39), dem der Einlass (47, 48) für das abzukühlende Vorprodukt (33) zugeordnet sein kann, enthält.

4. Vorrichtung (1) nach Anspruch 3, wobei die Kühleinrichtungen (41) sowohl der Schüssel (36) als auch dem Deckel (39) zugeordnet sind.

5. Vorrichtung (1) nach Anspruch 4, wobei der Kühlmantel (42) an der Schüssel (36) und am Deckel (39) des Behälters (17) angeordnet oder ausgebildet ist.

6. Vorrichtung (1) nach einem der vorhergehenden Ansprüche, wobei der Kühlmantel (42) wenigstens zwei getrennt betreibbare Kühlzonen (53a, b, c) enthält.

7. Vorrichtung (1) nach einem der vorhergehenden Ansprüche, wobei der Behälter (17) in einem Winkel (α) zur Senkrechten aufgestellt ist.

8. Vorrichtung (1) nach einem der vorhergehenden Ansprüche, wobei in dem Behälter (17) eine Cremierungsvorrichtung (9) angeordnet ist.

9. Hocherhitzungslinie (2) für Lebensmittelprodukte, wobei eine Vorrichtung (1) nach einem der Ansprüche 1 bis 8 enthalten ist.

10. Hocherhitzungslinie (2) für Lebensmittelprodukte, wobei es sich um eine kontinuierliche Hocherhitzungslinie handelt.

11. Verfahren zur Kühlung von hocherhitzten, insbesondere ultrahocherhitzten Lebensmittelprodukten, mit einer Flashkühlung, die einen Behälter (17) für ein abzukühlendes Vorprodukt (33), mit einem Einlass (47, 48) für das abzukühlende Vorprodukt (33) und einem Auslass (49, 50) für das abgekühlte Endprodukt (38) des Lebensmittelprodukts sowie Kühleinrichtungen (41) enthält, wobei Flüssigkeit aus dem Vorprodukt (33) verdampft und die Wärme durch Kondensation an der Innenwand des Behälters (17) abgeführt wird.

12. Verfahren nach Anspruch 11, wobei eine Vorrichtung (1) nach einem der Ansprüche 2 bis 8 verwendet wird.
